# EUROPÄISCHE PATENTSCHRIFT

(11) **EP 0 489 270 B1**
(45) Veröffentlichungstag und Bekanntmachung des Hinweises auf die Patenterteilung: **24.04.1996**
(21) Anmeldenummer: 91119047.8
(22) Anmeldetag: 08.11.1991
(51) Int. Cl.: F02C 1/00, F02C 6/00

(54) **Verfahren zur Druckverminderung eines Gases aus einem Primärnetz**
Method for pressure reduction of a gas in a primary net
Procédé pour la réduction de pression d'un gaz d'un réseau primaire

(30) Priorität: 03.12.1990 CH 3807/90
(43) Veröffentlichungstag der Anmeldung: 10.06.1992
(73) Patentinhaber: ASEA BROWN BOVERI AG, CH-5401 Baden (CH)
(72) Erfinder: Bertels, Pieter F.M., NL-3161 HP Rhoon (NL)

(56) Entgegenhaltungen:
- EP-A- 0 220 510
- CH-A- 524 762
- DE-A- 2 814 170
- GB-A- 2 007 823
- US-A- 4 418 530

## Beschreibung

### Technisches Gebiet

Die vorliegende Erfindung betrifft eine Verfahren zur Druckverminderung eines Gases gemäss Oberbegriff des Anspruchs 1. Sie betrifft auch eine Anlage zur Anwendung des Verfahrens.

### Stand der Technik

Bei einer Gasversorgung über eine Pipeline eines Gases, beispielsweise eines Erdgases, steht dieses im Primärnetz unter recht hohen Drücken, und zwar in der Grössenordnung von 40 bar, welche für den Transport desselben unabdingbar notwendig sind. Die hier vorherrschenden Temperaturen betragen normalerweise ca. 288°K. Wenn nun dieses Gas einem Sekundärnetz, beispielsweise einem Stadtnetz, zugeführt werden muss, so gilt jeweils den ursprünglichen Transportdruck von ca. 40 bar auf Verbraucherdruck von ca. 4,4 bar herabzumindern. Es ist offensichtlich, dass dieser Drosselungsprozess sehr grosse Exergieverluste mit sich bringt. Von daher ist zwischenzeitlich der Vorschlag bekannt geworden, zwischen Primärnetz und Sekundärnetz sogenannte Expander vorzusehen, welche bei der Druckverminderung das vorherrschende Druck-Potential des Gases im Primärnetz in Form elektrischer Energie zu rekuperierem vermögen. Bei dieser Vorkehrung ergibt sich nun aber, dass sich am Austritt der Expander tiefe Temperaturen einstellen, wogegen dann notgedrungen mit einer mehrstufigen Erwärmung des Gases Abhilfe geschafft werden muss, soweit, bis die Gastemperatur im Sekundärnetz mindestens 278° K beträgt, womit zugleich gesagt ist, dass ein Teil des rekuperierten Potentials mithin wieder aufgebraucht wird. Werden in eine Wirtschaftlichkeitsrechnung die Investitionskosten für die Expander und für die Einrichtungen zur kalorischen Wiederaufbereitung des Gases nach der Druckverminderung eingesetzt, so zeigt sich rasch, dass der dafür notwendige Kapitaleinsatz aus ertragsmässigen Ueberlegungen unattraktiv bleibt, weshalb hierfür keine Akzeptanz auszumachen ist.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren und bei einer Anlage der eingangs genannten Art das rekuperierte Potential aus der Druckdifferenz zwischen Primärnetz und Verbrauchernetz zu maximieren, und die Umwandlung in Energie mit einer maximierten Wirkungsgradausbeute durchzuführen.

Die Idee ist darin zu sehen, dass die Expansion des Gases aus dem Primärnetz auf Verbraucherdruck schaltungstechnisch in eine Gasturbogruppe intergriert wird, wobei sowohl eine direkte als auch eine indirekte Gasexpansion möglich ist. Der wesentliche Vorteil der Erfindung ist einerseits darin zu sehen, dass die Temperaturabsenkung aus der Expansion leicht durch "Abfallwärme" aus dem Prozess einer Gasturbogruppe aufgefangen und kompensiert werden kann. Andererseits ist es allenfalls auch möglich, die Brennkammer der Gasturbogruppe direkt mit diesem Gas zu betreiben. Damit lassen sich bei einer solchen Konstellation, wo die Umsetzung des Druckpotentials des im Primärnetz strömenden Gases mit einer Gasturbogruppe kombiniert ist, Wirkungsgrade der Anlage von über 75% erreichen, was gegenüber dem Wirkungsgrad einer Kombianlage, der gegenwärtig bei 50-55% liegt, einen deutlichen Qualitätssprung darstellt.

Aus CH-A-524 762 ist eine Gasturbinenanlage zum Antrieb des Verdichters für den Hochofenwind bekanntgeworden. Eine erste Gasturbine wirkt für den Luftverdichter, der die Luft der Verbrennungskammer zuführt; eine zweite Turbine treibt den Verdichter für den Hochofenwind an. Bei dieser Schaltung wird vorgeschlagen, die Ausnutzung des Gichtgases als Arbeitsmittel in der ersten Gasturbine und als Brennstoff in der Verbrennungskammer der zweiten Turbine vorzunehmen. Dabei wird als Vorteil angesehen, dass die Druckleitungen miteinander in Verbindung gesetzt werden können, so dass die Zuführung komprimierter Luft zu dem Hochofen auch bei Stillstand des Hochofenwind-Verdichter gewährleistet wird. Zwar ist es richtig, dass die Gichtgase höhere Temperaturen aufweisen, demgegenüber darf aber nicht verschwiegen werden, dass bei diesen Gasen relativ bescheidene Drücke vorherrschen, die noch durch die unabdingbar vorzusehende Reinigungseinrichtung für dea Gichtgas kräftig vermindert werden. Die Ausbeute aus dieser Energieumwandlung ist in qualitativer Hinsicht indessen dermassen gering, dass eine solche Druckluft ungeeignet ist, direkt in den Gasturboprozess zur Leistungssteigerung eingeführt zu werden, beispielsweise in den Verdichter der Gasturbogruppe. Eine solche Ausrichtung wird auch nirgends in dieser Druckschrift angetippt. Von daher sieht diese Schaltung auch vor, dass die direkt aus der Expansion der Gichtgase gewonnene Druckluft immer mit einer anderen konventionell bereitgestellten Luft mehrfach angereichert werden muss, soll die Brennkammer mit einem angemessenen Druck betrieben werden.

Vorteilhafte und zweckmässige Weiterbildungen der erfingungsgemässen Aufgabenlösung sind in den weiteren Ansprüchen gekennzeichnet.

Im folgenden wird anhand der Zeichnung ein Ausführungsbeispiel der Erfindung dargestellt und näher erläutert. Alle für das unmittelbare Verständnis der Erfindung nicht erforderlichen Elemente sind fortgelassen. Die Strömungsrichtung der Medien ist mit Pfeilen angegeben.

### Kurze Darstellung der Zeichnung

Es zeigt:

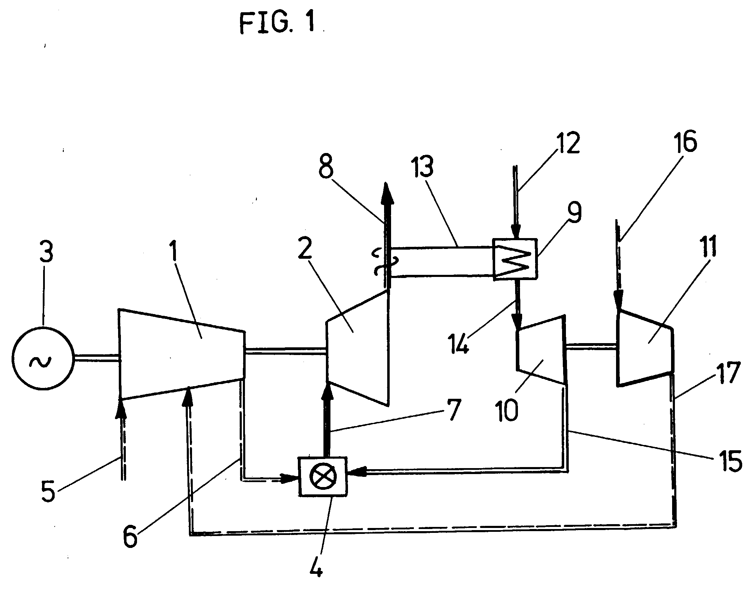

- Fig. 1: eine in eine Gasturbogruppe integrierte Gasexpansion.

### Wege zur Ausführung der Erfindung und gewerbliche Verwertbarkeit

Fig. 1 zeigt eine Gasturbogruppe und eine Schaltung einer Gasexpansion aus einem Primärnetz, wobei letztgenannte in die erstgenannte integriert ist. Die Gasturbogruppe besteht aus einem Verdichter 1, einem mit dem Verdichter 1 gekoppelten Generator 3, einer mit dem Verdichter 1 gekoppelten Gasturbine 2, einer zwischen Verdichter 1 und Gasturbine 2 wirkenden Brennkammer 4. Die vom Verdichter 1 angesaugte Luft 5 strömt nach dort erfolgter Kompression als Druckluft 6 in die Brennkammer 4, wo ihre kalorische Aufbereitung zu Heissgasen 7 stattfindet, welche dann der Gasturbine 2 zugeführt werden. Bei der Schaltung für die Expansion des Gases aus dem Primärnetz durchströmt das hochverdichtete Gas 12 zunächst einen Wärmeaustauscher 9, der sein Wärmepotential aus den Gasturbinenabgasen 8 bezieht, wie die Strömungsschlaufe 13 versinnbildlichen will. Danach strömt das nunmehr auch kalorisch aufbereitete Gas 14 in einen Expander 10, der seinerseits einen Verdichter 11 antreibt. Die von diesem Verdichter 11 angesaugte Luft 16 wird komprimiert. Die damit erzeugte Druckluft 17 wird dem Verdichter 1 der Gasturbogruppe an passender Stelle, vorzugsweise im Bereich einer Ausblasestelle des Verdichter 1, zugeführt. Da es sich hier um verhältnismässig kleine Luftmengen handelt, wird das aerodynamische Verhalten dieses Verdichters 1 mithin nicht gestört. Die Energie aus dieser Druckluft 17 kommt dem Gasturbo-Prozess zugute, dergestalt, dass die elektrische Leistung der Anlage erhöht wird. Das im Expander 10 entspannte Gas 15 wird in die Brennkammer 4 der Gasturbogruppe zugeleitet, wo es als Brennstoff dient. Die Schaltung gemäss Fig. 1 könnte mit folgenden Kennwerten, die lediglich ein qualitatives Beispiel wiedergeben, betrieben werden:

Das Gas 12 aus dem Primärnetz weist einen Druck von 40 bar sowie eine Temperatur von 15°C auf und wird mit einer Masse von 10 Kg/s herangeführt. Nach Durchlauf des Wärmeaustauschers 9 schnellt die Temperatur des Gases auf 77°C empor, bevor es im Expander 10 eine Leistung in der Grössenordnung von 1,37 MW freisetzt. Dieses Leistungspotential wird auf den Verdichter 11 mit annähernd gleicher Leistung übertragen. Geht man demnach von einer Verdichterleistung von 1,37 MW aus, so stellt der Verdichter 11 eine komprimierte Luftmenge von 10,8 kg/s zur Verfügung, mit einem Druck von ca.3 bar und einer Temperatur von ca.142°C, wenn die angesaugte Luft 16 eine solche von ca. 15°C aufweist. Da das entspannte Gas 15 zum Betreiben der Brennkammer 4 eingesetzt wird, wird es von den ursprünglichen 40 bar auf nunmehr ca.15 bar reduziert. Seine Temperatur beträgt nunmehr noch 15°C. Wenn des weiteren davon ausgegangen wird, dass der Verdichter 1 der Gasturbogruppe eine Luftansaugleistung von 500 kg/s bei 15°C aufweist, was eine Nettoleistung des Generators 3 von 150 MW ergibt, so ist bei einem Wirkungsgrad dieses Verdichters 1 von 90% und bei einem solchen von 85% für den anderen Verdichter 11 im Gasentspannungsstrang mit einer zusätzlichen Leistung der Anlage von 1,29 MW zu rechnen, ohne ein Mehrverbrauch an Brennstoff. Selbstverständlich kann die Schaltung gemäss Fig. 1 in dem Sinne modifiziert werden, dass eine bestimmte Menge Gas dem Verbrauchernetz zugeführt werden kann; allerdings wäre in einem solchen Fall zu beachten, dass die Expansion dieses Gases dann allerdings tiefere Werte aufweisen müsste, in der Grössenordnung von 4,4 bar.

## Patentansprüche

1. Verfahren zur Druckminderung eines Gases aus einem Primärnetz für ein Sekündärnetz, wobei die erzeugte Energie aus mindestens einem vom Gas aus dem Primärnetz beaufschlagten Expander auf mindestens einen mit diesem gekoppelten Verdichter übertragen wird, dessen Verdichterluft einer Gasturbogruppe, bestehend aus einem Verdichter, einer Brennkammer und einer den Verdichter antreibenden Gasturbine, zur Leistungssteigerung zugeführt wird, dadurch gekennzeichnet, dass die Verdichterluft (17) aus dem mit dem Expander (10) gekoppelten Verdichter (11) einem Verdichter (1) der Gasturbogruppe zugeführt wird.

2. Verfahren nach Anspruch 1, dadurch gekennzeichnet, dass das Gas (12) vor Beaufschlagung des Expanders (10, 22, 26) einen von Abgasen (8, 48, 49) einer Turbine (2, 30, 33) der Gasturbogruppe erwähmten Wärmetauscher (9, 21) durchströmt.

3. Anlage zur Anwendung des Verfahrens nach den Ansprüchen 1 und 2, bestehend aus einer Gasturbogruppe, mit einem Verdichter (1), einer Turbine (2), einem Generator (3), einer Brennkammer (4), dadurch gekennzeichnet, dass die Gasturbogruppe mit einem Wärmetauscher (9), in welchem ein Gas (12) aus dem Primärnetz mit Hilfe von Abgasen (8) aus der Turbine (2) erwärmbar ist, mit einem dem Wärmetauscher (9) nachgeschalteten Expander (10), welcher mit einem vorerwärmten Gas (14) aus dem Wärmetauscher (9) beaufschlagbar ist, und mit einem mit dem Expander (10) gekoppelten Verdichter (11) erweitert ist, dass die Brennkammer (4) mit dem Gas (15) aus dem Expander (10) betreibbar ist, und dass eine im mit dem Expander (10) gekoppelten Verdichter (11) komprimierte Luft (17) in den Verdichter (1) der Gasturbogruppe einleitbar ist.

## Claims

1. Method for reducing the pressure of a gas from a primary network for a secondary network, the energy generated by at least one expander, to which gas is admitted from the primary network, being transmitted to at least one compressor which is connected to the expander and the compressor air of which is supplied to a gas turbine group, which comprises a compressor, a combustion chamber and a gas turbine driving the compressor, in order to increase its power, characterised in that the compressor air (17) from the compressor (11) connected to the expander (10) is supplied to the compressor (1) of the gas turbine group.

2. Method according to Claim 1, characterised in that the gas (12) flows through a heat exchanger (9, 21) heated by exhaust gases (8, 48, 49) of a turbine (2, 30, 33) of the gas turbine group before it is admitted to the expander (10, 22, 26).

3. Installation for using the method according to Claims 1 and 2, consisting of a gas turbine group with a compressor (1), a turbine (2), a generator (3) and a combustion chamber (4), characterised in that the gas turbine group is extended by a heat exchanger (9), in which a gas (12) from the primary network can be heated by means of exhaust gases (8) from the turbine (2), by an expander (10) connected downstream of the heat exchanger (9), it being possible to admit a preheated gas (14) from the heat exchanger (9) to this expander (10), and by a compressor (11) connected to the expander (10), in that the combustion chamber (4) can be operated by the gas (15) from the expander (10), and in that air (17) compressed in the compressor (11) connected to the expander (10) can be introduced into the compressor (1) of the gas turbine group.

## Revendications

1. Procédé pour la réduction de pression d'un gaz d'un réseau primaire pour un réseau secondaire, l'énergie dégagée par au moins l'un des expanseurs sous l'impact du gaz du réseau primaire qui est transmis sur au moins un des compresseurs qui y est accouplé, dont l'air comprimé est acheminé vers un turbogroupe à gaz constitué d'un compresseur, d'une chambre de combustion et d'une turbine à gaz entraînant le compresseur pour augmenter son rendement, caractérisé en ce que l'air comprimé (17) du compresseur (11) accouplé à l'expanseur (10) est acheminé vers le compresseur (1) du turbogroupe à gaz.

2. Procédé selon la revendication 1, caractérisé en ce que le gaz (12) avant l'impact sur l'expanseur (10, 22, 26) traverse un échangeur de chaleur (9, 21) réchauffé par les gaz d'échappement (8, 48, 49) d'une turbine (2, 30, 33) du turbogroupe à gaz.

3. Installation pour l'application du procédé selon les revendications 1 et 2 , constituée d'un turbogroupe à gaz avec un compresseur (1), une turbine (2), un générateur (3), une chambre de combustion (4), caractérisée en ce que le turbogroupe à gaz peut être réchauffé avec un échangeur de chaleur (9) dans lequel un gaz (12) du réseau primaire est réchauffé au moyen de gaz d'échappement (8) de la turbine (2), avec un expanseur (10) branché derrière l'échangeur de chaleur (9), cet expanseur pouvant subir l'impact d'un gaz préchauffé (14) à travers l'échangeur de chaleur (9), et qui est complété par un compresseur (11) accouplé à l'expanseur (10), que la chambre de combustion (4) peut être activée par le gaz (15) de l'expanseur (10) et que l'air comprimé (17) par le compresseur (11) accouplé à l'expanseur (10) peut être injecté dans le compresseur (1) du turbogroupe à gaz.
